# EUROPÄISCHE PATENTSCHRIFT

(11) **EP 1 306 911 B1**
(45) Veröffentlichungstag und Bekanntmachung des Hinweises auf die Patenterteilung: **20.09.2006**
(21) Anmeldenummer: 02018814.0
(22) Anmeldetag: 23.08.2002
(51) Int. Cl.: H01M 2/02, H01M 2/20, H01M 2/24, H01M 2/26, H01M 10/04

(54) **Dicht verschlossener Akkumulator**
Sealed accumulator
Accumulateur étanche

(30) Priorität: 24.09.2001 DE 10146957
(43) Veröffentlichungstag der Anmeldung: 02.05.2003
(73) Patentinhaber: VARTA Automotive Systems GmbH, 30419 Hannover (DE)
(72) Erfinder: Bechtold, Dieter, 61118 Bad Vilbel (DE); Köhler, Uwe, Dr., 34131 Kassel (DE)
(74) Vertreter: Lins, Edgar

(56) Entgegenhaltungen:
- EP-A- 0 813 265
- EP-A- 1 087 450
- GB-A- 2 129 197
- US-A- 4 383 013
- US-A- 5 569 554
- US-A- 5 582 931

## Beschreibung

Gegenstand der Erfindung ist ein dicht verschlossener Akkumulator mit in einem Gehäuse angeordneten Wickelelektrodensätzen, sowie ein Verfahren zur Herstellung solcher Akkumulatoren.

Elektrochemische Energiespeicher werden vorwiegend in zwei verschiedenen Bauformen ausgeführt. Bei einer Bauform werden die beiden Elektroden durch beispielsweise ein Kunststofffaservlies als Separator voneinander elektrisch getrennt, zu einem spiralförmigen Wickel gerollt, der in ein zylinderförmiges Gefäß eingebracht wird. Die Elektroden werden über speziell ausgebildete Ableiter bzw. Verbinder mit Durchführungen durch die Zellenwandung verbunden. Die Zellen werden nach der Elektrolytzudosierung, mit der das Porensystem von Elektroden und Separator gefüllt wird, dicht verschlossen. Bei prismatischen Zellen ist ein Elektrodenstapel aus einer Vielzahl von Einzelelektroden vorhanden, die durch Separatoren voneinander elektrisch getrennt alternierend gestapelt werden. Die positiven und die negativen Elektroden werden jeweils elektrisch zusammengeschaltet und mit entsprechenden Poldurchführungen durch das gasdichte Gehäuse verbunden. Nach Füllung des Porensystems der Elektroden und des Separators ist eine solche Zelle betriebsbereit.

Zylindrische Zellen werden oft nur für Speichereinheiten mit verhältnismäßig geringen Kapazitäten verwendet, da bei dieser Bauform eine Erhöhung der Kapazität nur durch eine Vergrößerung des Durchmessers oder eine Verlängerung der Höhe des zylindrischen Wickels möglich ist. Ersteres erschwert die Abfuhr der im zyklischen Betrieb entstehenden Verlustwärme, während eine geometrische Verlängerung bei gleichbleibender Kapazität der Zelle eine Erhöhung des Innenwiderstands bzw. eine Verschlechterung der Leitfähigkeit zur Folge hat.

Bei prismatischen Zellformen kann dagegen durch Vergrößerung der Zellbreite bei feststehender Zelldicke eine höhere Kapazität ohne wesentliche Einbußen des Verhältnisses von Kapazität und Leitfähigkeit erzielt werden. Ein besonderer Vorteil der zylindrischen Bauform gegenüber prismatischen Bauformen ist allerdings deren höhere Formstabilität. Insbesondere bei wässrigen Batteriesystemen können während des Betriebsdrucks Innendrucke durch Gasung aufgebaut werden. Zellen prismatischer Bauform reagieren auf solche Druckbeanspruchungen sensibel und neigen zu Verformungen, die unerwünscht sind und die durch aufwendige konstruktive Gegenmaßnahmen aufgefangen werden müssen.

Es ist üblich, durch parallele Verschaltung von Einzelzellen höhere Kapazitäten zu realisieren. Solche Schaltungen werden sowohl mit einzelnen gasdichten Zellen als auch mit offenen Zellen vorgenommen. Eine Verschaltung von einzelnen zylindrischen Zellen ermöglicht es, bei Wahrung einer guten Formstabilität, höhere Kapazitätswerte zu realisieren. Damit ist allerdings ein höherer Aufwand verbunden, da für sämtliche Einzelzellen ein Gehäuse mit Dichtungen, Ventil, Stromkollektor etc. vorhanden sein muss. Darüber hinaus ist es notwendig, die einzelnen miteinander verschalteten Zellen auf gleichem Temperaturniveau zu halten, um im Dauerbetrieb eine gleichförmige Ladungsaufnahme und -abgabe sicherzustellen. Besondere Schwierigkeiten entstehen, wenn eine Vielzahl solcher durch Verschaltung erzeugter Speichereinheiten wiederum zu Serien mit hoher Systemspannung verschaltet werden.

Akkumulatorenbatterien mit mehreren Rundzellen, die miteinander verschaltet sind, sind beispielsweise dem Dokument DE 19750069 A1 zu entnehmen. Dabei ist zwischen den Zellen eine Temperiervorrichtung vorgesehen, die aus von einem Temperiermedium durchströmten Hohlkörper besteht, der halbkreisförmige Ausbuchtungen aufweist, deren Radien etwa denen der Zellen entsprechen, und die so angeordnet sind, dass sie die Zellen in ihrer räumlichen Lage zueinander fixieren.

Der Erfindung liegt die Aufgabe zugrunde, einen dicht verschlossenen Akkumulator anzugeben, der Wickelelektrodensätze besitzt und bei dem die Vorteile von prismatischen und zylindrischen Zellen miteinander vereinigt sind.

Diese Aufgabe wird erfindungsgemäß bei einem Akkumulator der eingangs genannten Gattung durch die kennzeichnenden Merkmale des Anspruchs 1 gelöst. In den Unteransprüchen sind vorteilhafte Ausgestaltungen der Erfindung und Verfahren zur Herstellung erfindungsgemäßer Akkumulatoren angegeben.

Erfindungsgemäß besitzt das Akkumulatorengehäuse mindestens zwei durch eine Zellentrennwand getrennte Hauptkammern, in welchen je mindestens zwei Elektrodenwickel angeordnet sind, wobei die Elektrodenwickel innerhalb jeder der Hauptkammern elektrisch parallel geschaltet sind und die in den Hauptkammern gebildeten Speicherelemente elektrisch in Reihe geschaltet sind. Bei einer erfindungsgemäßen Anordnung weisen die positiven Pole der Elektrodenwickel in jeder Hauptkammer in eine Richtung und in der benachbarten Hauptkammer in die entgegengesetzte Richtung.

Bei den Wickelelektrodensätzen handelt es sich insbesondere um NiMeH oder Lithium-lonen Zellen.

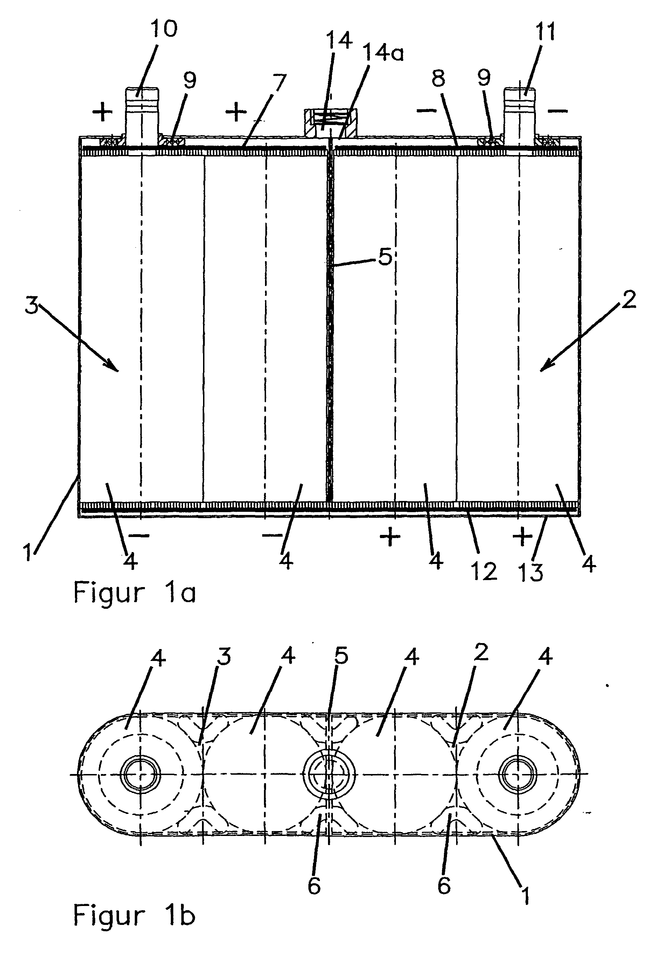

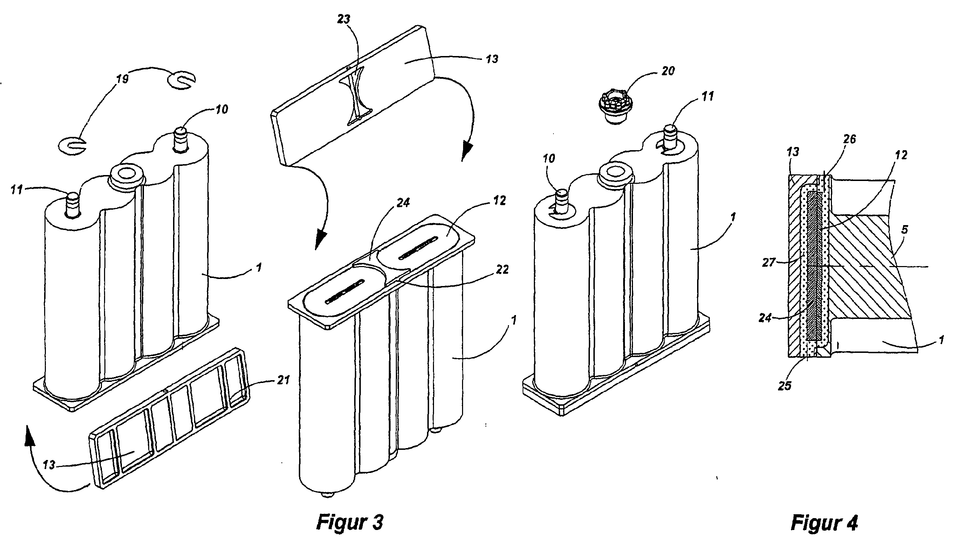

Im Folgenden ist der Gegenstand der Erfindung anhand der Figuren 1 bis 3 näher erläutert. Dabei zeigt Figur 1a einen Längsschnitt durch einen erfindungsgemäßen Akkumulator, Figur 1b zeigt einen zugehörigen Querschnitt. In Figur 2 ist schematisch Aufbau und Verschaltung der einzelnen Wickelelektrodensätze dargestellt. Figur 3 zeigt schematisch den Einbau der verschalteten Elektrodensätze in ein Gehäuse. Figur 4 zeigt einen Teilquerschnitt durch den Akkumulator im Bereich der Zellentrennwand.
Erfindungsgemäß ist ein Akkumulatorengehäuse 1 vorgesehen, welches mindestens zwei Hauptkammern 2 und 3 besitzt. In jeder dieser zwei Hauptkammern 2 und 3 sind jeweils mindestens zwei Elektrodenwickel 4 angeordnet, die, wie üblich, aus spiralig gerollten positiven und negativen Elektroden sowie einem Separator bestehen. Zwischen den beiden Hauptkammern des Gehäuses 1 ist eine Trennwand 5 vorgesehen. Bei einem, wie in Figur 1 dargestellt, etwa ovalem Gehäuse können die zylindrischen Elektrodenwickel durch Stützvorrichtungen 6 abgestützt sein, oder das Gehäuse kann weitgehend der Form der Elektrodenwickel angepasst sein, wie dies aus Figur 3 ersichtlich ist. Die einzelnen Elektrodenwickel 4 sind so angeordnet, dass in jeder Hauptkammer 2 und 3 jeweils die beiden Zellen 4 parallel geschaltet sind. In der Hauptkammer 3 sind demgemäss die beiden Elektrodenwickel 4 mit dem positiven Elektrodenableiter an der Oberseite angeordnet. In der Hauptkammer 2 ist die negative Ableitung des Elektrodenwickels oben vorgesehen. Die oberen positiven Pole sowie die entsprechenden negativen Pole sind jeweils durch eine Polableitung 7 bzw. Polableitung 8 verbunden. Der mit der Polableitung 7 verbundene positive Pol 10 ist ebenso wie der mit der negativen Polableitung 8 verbundene Pol 11 unter Zwischenlage einer Dichtungsanordnung 9 durch eine Öffnung im Zellengehäuse 1 durchgeführt. Im oberen Bereich der Zellentrennwand 5 ist eine Öffnung 14a vorgesehen, die einen Gasaustausch zwischen den benachbarten Hauptkammern 2 und 3 ermöglicht, einen Elektrolytdurchtritt jedoch vermeidet. Oberhalb dieser Gasdurchtrittsstelle 14a ist ein Rohrstutzen 14 angeordnet, der ein Überdruckventil 20 (Figur 3) aufnimmt. Im unteren Bereich des erfindungsgemäßen Akkumulators sind sämtliche Wickelelektrodensätze 4 bzw. die in den Hauptkammern gebildeten Speicherelemente mittels eines Ableiters 12 in Reihe geschaltet und der Zellenbehälter 1 ist in diesem Bereich durch einen Zellenboden 13 verschlossen.

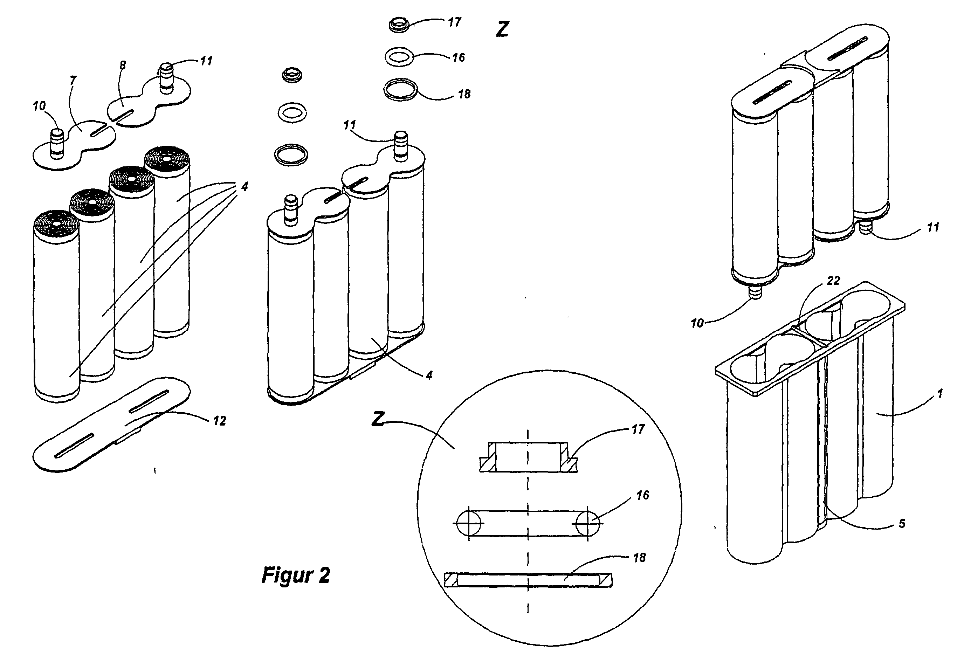

Der grundsätzliche Zusammenbau eines erfindungsgemäßen Akkumulators ist in den Figuren 2 und 3 dargestellt. An beispielsweise vier Zellen 4, die bezüglich ihrer Polarität wie oben erläutert angeordnet sind, werden großflächige Polableiterstreifen 7 und 8 angeschweißt, beispielsweise in einem an sich bekannten Lötverfahren, einem induktiven Schweißverfahren oder durch Laserschweißen, wie es in der deutschen Patentanmeldung 10015711.4 näher erläutert ist. Die Polableiterstreifen 7 und 8 sind vorzugsweise mit Durchbrüchen bzw. Öffnungen versehen, die die Elektrolytverteilung begünstigen.

Mit der positiven Ableiterscheibe 7 ist ein Zellenpol 10, mit der negativen Ableiterscheibe 8 ein Zellenpol 11 verbunden. Im unteren Bereich sind sämtliche Zellen 4 durch einen großflächigen Ableiterstreifen 12 verbunden, der sich durch bzw. über die Zellentrennwand 5 erstreckt, und so in Reihe geschaltet. Auf die Pole 10 und 11 werden anschließend Dichtungsanordnungen aufgebracht, die beispielsweise einen O-Ring 16 enthalten, der durch einen inneren Stützring 17 und einen äußeren Stützring 18 gehalten ist. Diese Dichtungsanordnung ist in Einzelheit Z der Figur 2 vergrößert dargestellt. Der so geschaffene Zellenverbund wird in das Gehäuse 1 mit Zellentrennwand 5 eingeführt.

Wie aus Figur 2 und Figur 3 ersichtlich, ist die Innenkontur des Gehäuses 1, welches vorzugsweise aus Kunststoff besteht, der Kontur der Elektrodenwickel 4 weitgehend angepasst. Der Zellenverbund wird in das Gehäuse 1 eingedrückt, die Pole treten durch entsprechende Öffnungen im Gehäuse, und gemäß Figur 3 werden die Pole 10 und 11 mit Hilfe von Federscheiben 19 verspannt und dabei die notwendigen Dichtkräfte für den O-Ring 16 erzeugt.

Anschließend wird der Zellenboden 13 aufgesetzt und durch Schweiß- oder Klebeverfahren, beispielsweise durch Laserverschweißung oder durch ein Spiegelschweißverfahren dicht mit dem Gehäuse 1 verbunden. Dabei wird auch die Durchführung des Streifenableiters 12 durch die Zellentrennwand 5 abgedichtet. Bei der fertigen Zelle kann in den Rohrstutzen 14 ein übliches Überdruckventil 20 eingesetzt werden. Der Gehäuseboden 13 kann an seiner nach außen weisenden Seite mit Rippen 21 versehen werden, die dem Boden eine erhöhte Festigkeit verleihen. Auf der dem Gehäuse zugewandten Seite kann der Gehäuseboden eine Vertiefung oder Nut 23 besitzen und die Zellentrennwand 5 kann in dem Bereich, in dem der Kontaktstreifen 12 sie überdeckt, ebenfalls eine Nut 22 (Figur 2) aufweisen. In diese Vertiefungen bzw. Nuten wird ein elastisches Dichtungsmaterial 27 eingebracht, welches die Durchführung des Streifenableiters 12 im Bereich der Zellentrennwand 5 abdichtet. Dazu wird über im Gehäuseboden 13 angeordneten Öffnungen in diesen Bereich ein Kunststoff, beispielsweise ein 2-Komponenten-polymer, eingebracht, der eine gute Abdichtung des gesamten Durchführungsbereichs des Ableiterstreifens 12 durch die Zellentrennwand 5 gewährleistet.

In Figur 4 ist der Durchführungsbereich des Ableiterstreifens 12 durch die Zellentrennwand vergrößert dargestellt. In diesem Durchführungsbereich kann der Ableiterstreifen 12 insbesondere mit einer aufgelöteten oder aufgeschweißten elektrisch leitfähige Verstärkung 24 versehen werden, die die Leitfähigkeit und Strombelastbarkeit verbessert. Durch Öffnungen im Gehäuseboden 13 (Einlassöffnung 25, Auslassöffnung 26) wird, wie oben erläutert, eine elastische Dichtungsmasse als Dichtungsmaterial 27, insbesondere ein 2-Komponenten-Polymer, eingedrückt oder eingespritzt.

## Patentansprüche

1. Dicht verschlossener Akkumulator mit in einem Gehäuse angeordneten Wickelelektrodensätzen, **dadurch gekennzeichnet, dass** das Gehäuse (1) mindestens zwei durch eine Zellentrennwand getrennte Hauptkammern (2 und 3) besitzt, in welchen mindestens je zwei Elektrodenwickel (4) angeordnet sind, wobei die Elektrodenwickel (4) innerhalb der Hauptkammern (2, 3) jeweils parallel geschaltet sind, die in den Hauptkammern (2, 3) gebildeten Speicherelemente elektrisch in Reihe geschaltet sind und die positiven Pole der Elektrodenwickel (4) in einer Hauptkammer (3) in eine Richtung und in der benachbarten Hauptkammer (2) in die entgegen gesetzte Richtung weisen.

2. Dicht verschlossener Akkumulator nach Anspruch 1, **dadurch gekennzeichnet, dass** die positiven und negativen Elektroden der Elektrodenwickel (4) in einer der Hauptkammern (2, 3) jeweils durch eine Kontaktscheibe (7, 8) verbunden sind, die mit Polbolzen (10) und (11) versehen sind, und dass die Gegenpole sämtlicher Zellen durch eine alle Zellen verbindende Kontaktscheibe (12) elektrisch in Reihe geschaltet sind.

3. Dicht verschlossener Akkumulator nach einem der Ansprüche 1 oder 2, **dadurch gekennzeichnet, dass** die Innenkontur des die Elektrodenwickel (4) aufnehmenden Gehäuses (1) an die Form der Elektrodenwickel (4) angepasst ist.

4. Dicht verschlossener Akkumulator nach einem der Ansprüche 1 bis 3, **dadurch gekennzeichnet, dass** die benachbarten Hauptkammern (2, 3) über eine Öffnung (14a) einen gemeinsamen Gasraum und ein gemeinsames Sicherheitsventil (20) besitzen.

5. Dicht verschlossener Akkumulator nach einem der Ansprüche 1 bis 4, **dadurch gekennzeichnet, dass** die Polbolzen (10, 11) unter Zwischenlage einer Dichtungsanordnung (16, 17, 18) durch eine Öffnung im Zellengehäuse (1) durchgeführt sind und an der Außenseite des Gehäuses (1) durch Federscheiben (19) gehalten sind.

6. Dicht verschlossener Akkumulator nach einem der Ansprüche 1 bis 5, **dadurch gekennzeichnet, dass** der Durchtrittsbereich der Kontaktscheibe (12) durch die Zellentrennwand (5) durch eine in eine Nut (22) in der Zellentrennwand (5) und eine Nut (23) im Gehäuseboden (13) eingebrachte elastische Dichtungsmasse (27) abgedichtet ist.

7. Verfahren zur Herstellung eines Akkumulators nach einem oder mehreren der Ansprüche 1 bis 6, **dadurch gekennzeichnet, dass** in benachbarte Hauptkammern (2, 3) eines an seiner Unterseite offenen Akkumulatorenbehälters jeweils mindestens zwei Elektrodenwickel (4), die über Polableiter (7) bzw. (8), die mit Endpolen (10) bzw. (11) versehen und parallel geschaltet sind, eingesetzt werden, wobei die Endpole (10, 11) Öffnungen im Gehäuseoberteil durchdringen und dass anschließend die Unterseite des Gehäuses (1) mittels eines Gehäusebodens (13) dicht verschlossen wird.

8. Verfahren nach Anspruch 7, **dadurch gekennzeichnet, dass** Gehäuse (1) und Gehäuseboden (13) aus einem Kunststoffmaterial bestehen und durch Laserschweißen dicht miteinander verbunden werden.

9. Verfahren nach Anspruch 7 oder 8, **dadurch gekennzeichnet, dass** der Eintrittsbereich der Kontaktscheibe (12) durch die Zellentrennwand (5) durch Einbringung einer dauerelastischen Masse abgedichtet wird.

## Claims

1. A sealed rechargeable battery with sets of wound electrodes arranged in a housing, **characterized in that** the housing (1) has at least two main chambers (2 and 3), which are separated by a cell separating wall and in each of which at least two electrode coils (4) are arranged, wherein the electrode coils (4) within the main chambers (2, 3) being in each case connected in parallel, the storage elements formed in the main chambers (2, 3) being electrically connected in series and the positive poles of the electrode coils (4) in one main chamber (3) point in one direction and in the neighboring main chamber (2) they point in the opposite direction.

2. The sealed rechargeable battery as claimed in claim 1, **characterized in that** the positive and negative electrodes of the electrode coils (4) in one of the main chambers (2, 3) are respectively connected by a contract disk (7, 8), which are provided with pole posts (10) and (11), and wherein the opposite poles of all the cells are electrically connected in series by a contact disk (12) connecting all the cells.

3. The sealed rechargeable battery as claimed in claim 1 or 2, **characterized in that** the inner contour of the housing (1) receiving the electrode coils (4) is adapted to the shape of the electrode coils (4).

4. The sealed rechargeable battery as claimed in one of claims 1 to 3, **characterized in that** the neighboring main chambers (2, 3) have via an opening (14a) a common gas space and a common safety valve (20).

5. The sealed rechargeable battery as claimed in one of claims 1 to 4, **characterized in that** the pole posts (10, 11) are led through an opening in the cell housing (1), with a sealing arrangement (16, 17, 18) interposed, and are held on the outer side of the housing (1) by spring washers (19).

6. The sealed rechargeable battery as claimed in one of claims 1 to 5, **characterized in that** the bushing region of the contact disk (12) through the cell separating wall (5) is sealed by an elastic sealing composition (27) introduced into a groove (22) in the cell separating wall (5) and a groove (23) in the housing base (13)

7. A method of producing a rechargeable battery as claimed in one or more of claims 1 to 6, **characterized in that** at least two electrode coils (4), which are connected via pole discharge elements (7) and (8), provided with end poles (10) and (11), respectively, and are connected in parallel, are in each case inserted into neighboring main chambers (2, 3) of a rechargeable battery container which is open on its underside, the end poles (10, 11) passing through openings in the upper housing part, and wherein the underside of the housing (1) is subsequently sealed by means of a housing base (13).

8. The method as claimed in claim 7, **characterized in that** the housing (1) and housing base (13) consist of a plastics material and are connected to each other in a sealed manner by laser welding.

9. The method as claimed in claim 7 or 8, **characterized in that** the entry region of the contact disk (12) through the cell separating wall (5) is sealed by introducing a permanently elastic composition.

## Revendications

1. Accumulateur fermé hermétiquement comprenant des jeux d'électrodes enroulées disposées dans un boîtier,
**caractérisé en ce que**
le boîtier (1) possède au moins deux chambres principales (2 et 3) séparées par une paroi de séparation des cellules, dans lesquelles sont disposées au moins respectivement deux enroulements d'électrode (4), les enroulements d'électrode (4) étant respectivement connectés en parallèle à l'intérieur des chambres principales (2, 3), les éléments d'accumulation formés dans les chambres principales (2, 3) étant connectés électriquement en série, et les pôles positifs des enroulements d'électrode (4) sont orientés dans une direction dans une chambre principale (3) et dans la direction opposée dans la chambre principale voisine (2).

2. Accumulateur fermé hermétiquement selon la revendication 1,
**caractérisé en ce que**
les électrodes positives et négatives des enroulements d'électrode (4), dans l'une des chambres principales (2, 3), sont respectivement reliées par un disque de contact (7, 8) pourvu de bornes polaires (10) et (11), et les pôles opposés de toutes les cellules sont connectés électriquement en série par un disque de contact (12) reliant toutes les cellules.

3. Accumulateur fermé hermétiquement selon l'une des revendications 1 ou 2,
**caractérisé en ce que**
le contour intérieur du boîtier (1) accueillant les enroulements d'électrode (4) est adapté à la forme des enroulements d'électrode (4).

4. Accumulateur fermé hermétiquement selon l'une des revendications 1 à 3,
**caractérisé en ce que**
les chambres principales voisines (2, 3) possèdent, via une ouverture (14a), une chambre de gaz commune et une soupape de sécurité commune (20).

5. Accumulateur fermé hermétiquement selon l'une des revendications 1 à 4,
**caractérisé en ce que**
les bornes polaires (10, 11) traversent une ouverture dans le boîtier à cellules (1) par l'intermédiaire d'un dispositif d'étanchéité (16, 17, 18) et sont maintenus au niveau du côté extérieur du boîtier (1) par des rondelles élastiques (19).

6. Accumulateur fermé hermétiquement selon l'une des revendications 1 à 5,
**caractérisé en ce que**
la zone de traversée du disque de contact (12) à travers la paroi de séparation des cellules (5) est isolée de manière étanche par une masse d'étanchéité élastique (27) insérée dans une rainure (22) située dans la paroi de séparation des cellules (5) et dans une rainure (23) située dans le fond du boîtier (13).

7. Procédé de fabrication d'un accumulateur selon l'une ou plusieurs des revendications 1 à 6,
**caractérisé en ce que**
dans les chambres principales voisines (2, 3) d'un récipient d'accumulateurs ouvert sur son côté inférieur, on utilise respectivement au moins deux enroulements d'électrode (4) connectés en parallèle via des éléments de décharge de pôle (7) ou (8) pourvus de pôles d'extrémité (10) ou (11), les pôles d'extrémité (10, 11) traversant des ouvertures dans la partie supérieure du boîtier et le côté inférieur du boîtier (1) est ensuite fermé de manière hermétique au moyen d'un fond de boîtier (13).

8. Procédé selon la revendication 7,
**caractérisé en ce que**
le boîtier (1) et le fond de boîtier (13) se composent d'une matière plastique et sont reliés hermétiquement entre eux par soudage au laser.

9. Procédé selon la revendication 7 ou 8,
**caractérisé en ce que**
la zone d'entrée du disque de contact (12) à travers la paroi de séparation des cellules (5) est isolée de manière étanche par l'introduction d'une masse élastique de longue durée.
